# EUROPEAN PATENT APPLICATION

(11) **EP 4 603 194 A1**
(43) Date of publication of application: **20.08.2025**
(21) Application number: 23946506.5
(22) Date of filing: 13.12.2023
(51) Int. Cl.: B05C 5/02, B05C 11/10, H01M 4/04

(54) **COATING DEVICE AND BATTERY PROCESSING APPARATUS**

(30) Priority: 27.07.2023 CN 202321987132 U
(71) Applicant: Contemporary Amperex Technology Co., Limited, Ningde, Fujian 352100 (CN)
(72) Inventor: LIN, Yinxiang, Ningde, Fujian 352100 (CN)
(74) Representative: Ran, Handong
(86) International application number: PCT/CN2023/138536
(87) International publication number: WO 2025/020431

(57) **Abstract**

A coating device (100) and a battery processing apparatus. The coating device (100) comprises : a coating die head (10), provided with a discharge opening (11); an adjusting assembly (20), provided on the coating die head (10); and a control assembly, connected to the adjusting assembly (20), the control assembly being used for measuring the actual surface density of a coating on an electrode sheet, and, according to the difference value between the actual surface density and a target surface density, controlling the adjusting assembly (20) to adjust the flowing-through area of the discharge opening (11). The control assembly measures and feeds back in real time the actual surface density of the coating, and then according to the difference value between the actual surface density and the target surface density, automatically controls the adjusting assembly (20), so as to achieve the purpose of rapidly and timely adjusting the flowing-through area of the discharge opening (11), thereby enabling the adjustment on the discharging amount to be more timely and rapid; in addition, adjustment on the basis of the difference value between the actual surface density and the target surface density improves the accuracy during the adjustment process, thereby improving the coating quality and the coating efficiency for electrode sheets.

## Description

### CROSS-REFERENCE TO RELATED APPLICATIONS

This application claims priority to Chinese Patent Application No. 2023219871329, filed on July 27, 2023 and entitled "COATING APPARATUS AND BATTERY PROCESSING DEVICE", which is incorporated herein by reference in its entirety.

### TECHNICAL FIELD

This application relates to the field of battery technologies, and in particular, to a coating apparatus and a battery processing device.

### BACKGROUND

In the production process of batteries, the coating process of electrode plates is an important step in process design and production, and the quality of coating plays a decisive role in the overall performance of batteries. Therefore, it is crucial to improve the coating quality and coating efficiency in the battery manufacturing process.

However, in the current coating process of electrode plates, adjustment for the discharge amount of the coating apparatus exhibit delays and low accuracy, resulting in reduced final coating quality and coating efficiency of electrode plates.

### SUMMARY

In view of this, it is necessary to provide a coating apparatus and a battery processing device to address the issues that the adjustment accuracy of the discharge amount of coating slurry remains low and the adjustment exhibit delays in the current coating process of electrode plates.

According to a first aspect, this application provides a coating apparatus configured to coat an electrode plate, where the coating apparatus includes:
a coating die head including an upper die head and a lower die head spaced apart from each other, where the upper die head and the lower die head are spaced apart to form a discharge port;
an adjustment assembly, disposed on the upper die head; and
a control assembly connected to the adjustment assembly, where the control assembly is configured to detect an actual surface density of coating on an electrode plate and control the adjustment assembly to adjust a flow area of the discharge port based on a difference between the actual surface density and a target surface density.

The adjustment assembly is configured to be capable of adjusting the flow area of the discharge port by adjusting a spacing distance between the upper die head and the lower die head.

Real-time detection of the actual surface density of coating on the electrode plate by the control assembly enables timely reflection of the coating quality of a slurry on the electrode plate. Further, the control assembly automatically controls the adjustment assembly to adjust the flow area of the discharge port based on the difference between the actual surface density and the target surface density, thereby flexibly adjusting a discharge amount from the discharge port to ensure that the actual surface density of coating on the electrode plate meets production requirements, thus improving coating quality and coating efficiency.

In some embodiments, the adjustment assembly includes an adjustment member and a first drive member drivingly connected to each other, where the adjustment member is movably disposed on the coating die head, at least a portion of the adjustment member is located within the discharge port, and the first drive member is in a communication connection with the control assembly and drives the adjustment member to move within the discharge port to adjust the flow area of the discharge port.

The adjustment member is driven to move within the discharge port by the first drive member, allowing for rapid adjustment of the flow area of the discharge port and the discharge amount from the discharge port, thereby improving the coating quality of the electrode plate.

In some embodiments, the discharge port extends longitudinally along a first direction, the adjustment member includes a plurality of adjustment sub-members arranged along the first direction, and each adjustment sub-member is movably disposed within the discharge port along a second direction;
where the first direction, the second direction, and an opening direction of the discharge port are arranged to intersect pairwise.

The cooperation between the plurality of adjustment sub-members and the discharge port enables division of the discharge port into different discharge sub-ports along the first direction. Adjustment of the flow area of a corresponding discharge sub-port by each adjustment sub-member 211 allows targeted adjustment of the slurry coating amount in the coating region corresponding to that discharge sub-port. This enables more accurate adjustment of the coating quality on the electrode plate.

In some embodiments, the coating apparatus further includes a movement assembly disposed on the coating die head, where the movement assembly is connected to the first drive member and is in a communication connection with the control assembly; and
the movement assembly is configured to drive the first drive member to move along the first direction, enabling the first drive member to drive each adjustment sub-member to move along the second direction.

Control by the control assembly enables the movement assembly to drive the first drive member to flexibly move along the first direction, so that the first drive member is connected to a corresponding adjustment sub-member more accurately, thereby accurately adjusting the coating quality on the electrode plate at the position corresponding to that adjustment sub-member.

In some embodiments, a plug connector is provided at one of each adjustment sub-member and the first drive member in a protruding manner, a slot is provided at the other one of each adjustment sub-member and the first drive member, and each adjustment sub-member and the first drive member are in plug-fit cooperation through the plug connector and the slot.

The cooperation between the plug connector and the slot enables rapid connection and disconnection between the first drive member and different adjustment sub-members, allowing the first drive member to drive different adjustment sub-members to move within the discharge port, thus more flexibly adjusting the flow area of the discharge port at different positions along the first direction.

In some embodiments, the movement assembly includes a second drive member, a guide member, and a transmission member, where the guide member is disposed on the coating die head in a manner of extending along the first direction, the transmission member is movably disposed on the guide member along the first direction and is connected to both the first drive member and the second drive member, and the second drive member is in a communication connection with the control assembly; and
the transmission member is configured to drive the first drive member to move along the first direction under the drive of the second drive member.

Thus, the second drive member, under the control of the control assembly, can drive the transmission member to move along the first direction under the guidance of the guide member, thereby driving the first drive member to move along the first direction. This enables the first drive member to more accurately and more flexibly move to a position corresponding to a corresponding adjustment sub-member, thereby smoothly driving that adjustment sub-member to move within the discharge port.

In some embodiments, the control assembly includes a detection member and a control member in communication connection, where the detection member is configured to detect the actual surface density of coating on the electrode plate, and the control member is configured to receive the actual surface density and compare the actual surface density with the target surface density to obtain a difference, so as to control the adjustment assembly to adjust the flow area of the discharge port based on the difference.

The provision of the detection member and the control member enables real-time detection of the actual surface density of a coated region on the electrode plate and timely feedback to the control member. The control member can rapidly compare the actual surface density with the target surface density, so that the adjustment assembly is controlled in time to perform a corresponding operation. Thus, the actual surface density can gradually approach the target surface density or be equal to the target surface density, thus improving the coating quality and coating efficiency of the electrode plate.

In some embodiments, the coating apparatus further includes a piezoelectric sensor in communication connection with the control member, where the piezoelectric sensor is connected to each adjustment sub-member and is configured to be capable of adjusting a movement distance of a corresponding adjustment sub-member along the second direction based on an actual output voltage of each adjustment sub-member.

The piezoelectric sensor can flexibly adjust the flow area of the discharge port based on the actual output voltage in the coating apparatus, which is in cooperation with parameters of the actual surface density on the coated electrode plate to more comprehensively reflect the coating quality on the electrode plate, thereby improving the accuracy of coating process adjustment.

In some embodiments, the coating apparatus further includes a displacement sensor in communication connection with the control member, where the displacement sensor is connected to each adjustment sub-member and is configured to detect a movement distance of each adjustment sub-member along the second direction.

Detection and feedback for the movement distance of the adjustment sub-members along the second direction by the displacement sensor, combined with the actual surface density, the actual output voltage of the adjustment sub-member, and the actual movement distance of the adjustment sub-member, enable real-time feedback and adjustment during the adjustment process. This achieves intelligent closed-loop control of the adjustment assembly, effectively improving the coating quality and coating efficiency.

According to a second aspect, this application provides a battery processing device including the coating apparatus as described above.

According to the above coating apparatus and battery processing device, during the coating process of an electrode plate, the control assembly can detect the actual surface density of the slurry applied on the electrode plate in real time and control the adjustment assembly based on the difference between the actual surface density and the target surface density. The adjustment assembly adjusts the flow area of the discharge port to adjust the discharge amount of the slurry extruded from the discharge port, thereby changing the actual surface density of the slurry applied on the electrode plate to make the actual surface density approach or meet the requirements of the target surface density. In this way, the control assembly provides real-time detection and real-time feedback for the actual surface density of coating, and then automatically controls the adjustment assembly based on the difference between the actual surface density and the target surface density, achieving rapid and timely adjustment of the flow area of the discharge port, so that a discharge amount can be adjusted more timely and quickly. In addition, the adjustment based on the difference between the actual surface density and the target surface density can improve the accuracy of the adjustment process and improve the coating quality and coating efficiency of the electrode plate.

### BRIEF DESCRIPTION OF DRAWINGS

FIG. 1 is a schematic structural diagram of a coating apparatus according to one or more embodiments.
FIG. 2 is a partial enlarged view of portion A in FIG. 1.
FIG. 3 is a schematic structural diagram of a coating apparatus according to one or more embodiments.

Description of reference signs: 100. coating apparatus; 10. coating die head; 20. adjustment assembly; 30. movement assembly; 11. discharge port; 12. upper die head; 13. lower die head; 21. adjustment member; 22. first drive member; 31. second drive member; 32. guide member; 33. transmission member; 211. adjustment sub-member; 221. plug connector; 2111. slot; a. first direction; b. second direction; and c. opening direction.

### DESCRIPTION OF EMBODIMENTS

To make the above objectives, features, and advantages of this application more apparent and understandable, specific embodiments of this application are described in detail below with reference to the accompanying drawings. In the following description, many specific details are described to provide a thorough understanding of this application. However, this application can be implemented in many other ways different from those described herein, and persons skilled in the art can make similar improvements without inventive efforts. Therefore, this application is not limited by the specific embodiments disclosed below.

In the description of this application, it should be understood that if terms such as "length," "width," and "thickness" are present, orientations or positional relationships indicated by these terms are based on orientations or positional relationships shown in the drawings. These terms are merely for facilitating the description of this application and simplifying the description, rather than indicating or implying that the referred apparatus or element must have a specific orientation, be constructed, and operate in a specific orientation. Therefore, these terms shall not be construed as limitations to this application.

In addition, if the terms "first" and "second" are present, these terms are merely for descriptive purposes and shall not be understood as any indication or implication of relative importance or any implicit indication of the number of technical features indicated. Therefore, a feature defined by "first" or "second" may explicitly or implicitly include at least one such feature. In the description of this application, if the term "a plurality of" is present, the "a plurality of" means at least two, such as two or three, unless otherwise specifically defined.

It should be noted that if an element is referred to as being "disposed on" another element, that element may be located directly on the another element, or an intervening element may exist. If an element is deemed as being "connected to" another element, that element may be connected directly to the another element, or an intervening element may exist.

Currently, from the perspective of market trends, the application of traction batteries continues to expand widely. Traction batteries have been used not only in energy storage power supply systems such as hydroelectric power plants, thermal power plants, wind power plants, and solar power plants, but also widely used in electric transportation tools such as electric bicycles, electric motorcycles, and electric vehicles, as well as other fields. With the continuous expansion of application fields for traction batteries, market demands for traction batteries also continue to increase.

A battery cell is the smallest unit constituting a battery. A battery is typically formed by a plurality of battery cells connected in series, parallel, or series-parallel, where being connected in series-parallel refers to a combination of both series and parallel connections of the plurality of battery cells.

The battery cell may include a top cover, a housing, and an electrode assembly, where the top cover can seal and cover an opening of the housing, thereby enclosing, together with the housing, an internal environment for accommodating the electrode assembly. The electrode assembly serves as a component in the battery cell where electrochemical reactions take place, primarily formed by winding or stacking a positive electrode plate and a negative electrode plate, with a separator typically disposed between the positive electrode plate and the negative electrode plate.

The positive electrode plate and the negative electrode plate are each formed by coating an electrode plate with an active substance layer. The positive electrode plate is formed by coating the electrode plate with a positive electrode active substance layer, while the negative electrode plate is formed by coating the electrode plate with a negative electrode active substance layer.

Specifically, the positive electrode active substance layer and the negative electrode active substance layer react with an electrolyte in the housing to achieve charging and discharging of the battery. Therefore, the coating quality of the positive electrode active substance layer or the negative electrode active substance layer on the electrode plate directly affects the use performance of the battery.

However, in a current electrode plate coating process, adjustment of the coating quality of the active substance layer on the electrode plate typically involves observing a coating state of the active substance layer on the electrode plate and manually adjusting a discharge amount of the coating apparatus. On one hand, the adjustment accuracy of this method is low. On the other hand, it is difficult to timely adjust subsequent coating quality based on changes in the physical properties of the slurry extruded by the coating apparatus, resulting in delays in the adjustment process, thereby affecting the coating quality and coating efficiency of the electrode plate.

To address the issues that in the current electrode plate coating process, adjustment of the discharge amount of the coating apparatus exhibit delays and the accuracy of the adjustment of the discharge amount is low, one or more embodiments of this application propose a coating apparatus. During the coating process of an electrode plate, the control assembly can detect the actual surface density of the slurry applied on the electrode plate in real time and control the adjustment assembly based on a difference between an actual surface density and a target surface density. The adjustment assembly adjusts a flow area of a discharge port, thereby adjusting a discharge amount of the slurry extruded from the discharge port and changing the actual surface density of the slurry applied on the electrode plate to make the actual surface density approach or meet the requirements of the target surface density. Thus, the control assembly provides real-time detection and real-time feedback for the actual surface density of coating, and then automatically controls the adjustment assembly based on the difference between the actual surface density and the target surface density, to achieve rapid and timely adjustment of the flow area of the discharge port, so that a discharge amount can be adjusted more timely and quickly. In addition, the adjustment based on the difference between the actual surface density and the target surface density can improve the accuracy of the adjustment process and improve the coating quality and coating efficiency of the electrode plate.

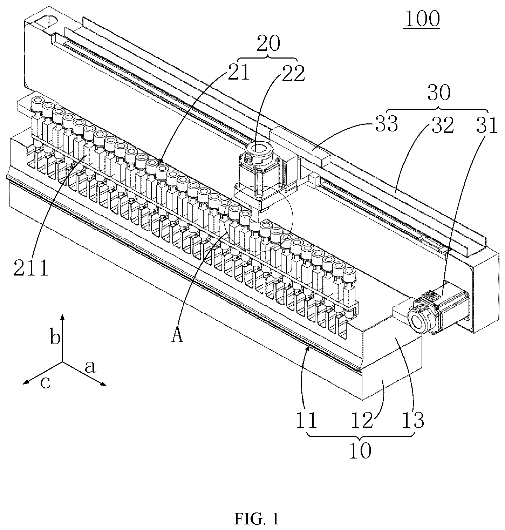

Referring to FIG. 1, an embodiment of this application provides a coating apparatus 100 configured to coat an electrode plate, where the coating apparatus 100 includes a coating die head 10, an adjustment assembly 20, and a control assembly (not shown in the figure). The coating die head 10 includes a discharge port 11, the adjustment assembly 20 is disposed on the coating die head 10, and the control assembly is connected to the adjustment assembly 20. The control assembly is configured to detect an actual surface density of coating on the electrode plate and control the adjustment assembly 20 to adjust a flow area of the discharge port 11 based on a difference between the actual surface density and a target surface density.

It should be noted that the electrode plate refers to a component capable of providing support and coating basis for the slurry, allowing the slurry to form an active substance layer thereon, thus ultimately forming a component of a positive electrode plate or a negative electrode plate. The slurry applied on the electrode plate may be a positive electrode active substance or a negative electrode active substance.

The coating die head 10 refers to a structure capable of accommodating slurry and extruding the slurry onto the electrode plate through the discharge port 11. The coating die head 10 may include an upper die head 12 and a lower die head 13 spaced apart from each other, where the upper die head 12 and the lower die head 13 are spaced apart to form the discharge port 11. In addition, a receiving groove is provided on a surface of the lower die head 13 facing the upper die head 12, where the receiving groove communicates with the discharge port 11 and serves to accommodate the slurry, enabling smooth extrusion of the slurry from the discharge port 11.

Further, the adjustment assembly 20 is disposed on the upper die head 12, where the adjustment assembly 20 can adjust a spacing distance between the upper die head 12 and the lower die head 13 to achieve the purpose of adjusting the flow area of the discharge port 11, thereby adjusting the discharge amount of the slurry extruded from the discharge port 11.

The flow area of the discharge port 11 refers to an area of a cross-section of the discharge port 11 intercepted by a plane perpendicular to an opening direction of the discharge port 11. A larger flow area of the discharge port 11 results in a larger discharge amount of the slurry from the discharge port 11. Conversely, a smaller flow area of the discharge port 11 results in a smaller discharge amount of the slurry from the discharge port 11.

The control assembly refers to a component capable of detecting the actual surface density of the slurry applied on the electrode plate, comparing the detected actual surface density with a target surface density internal preset in the control assembly to obtain a difference between the two, and controlling the adjustment assembly 20 based on the difference so as to adjust the flow area of the discharge port 11.

It should be understood that, surface density refers to a mass of an active substance slurry per unit area of the electrode plate. The actual surface density represents an actual mass of an active substance slurry applied on per unit area of the electrode plate, while the target surface density represents a theoretical mass of an active substance slurry required to be applied on per unit area of the electrode plate. When the actual mass of the active substance slurry applied on the electrode plate is equal to or approaches the theoretical mass, the electrode plate can achieve better coating quality.

Specifically, the slurry fills the receiving groove. During the coating process, the slurry is extruded from the discharge port 11 and applied onto the electrode plate. The control assembly detects the slurry coated on the electrode plate in real time. When the control assembly detects that the actual surface density of coating on the electrode plate falls below the target surface density, the control assembly controls the adjustment assembly 20 to increase the flow area of the discharge port 11, thereby increasing the discharge amount from the discharge port 11. When the control assembly detects that the actual surface density of coating on the electrode plate exceeds the target surface density, the control assembly controls the adjustment assembly 20 to decrease the flow area of the discharge port 11, thereby reducing the discharge amount from the discharge port 11.

Thus, real-time detection of the actual surface density of coating on the electrode plate by the control assembly enables timely reflection of the coating quality of the slurry on the electrode plate. Further, the control assembly automatically controls the adjustment assembly 20 to adjust the flow area of the discharge port 11 based on the difference between the actual surface density and the target surface density, thereby flexibly adjusting the discharge amount from the discharge port 11 to ensure that the actual surface density of coating on the electrode plate meets production requirements, thus improving the coating quality and coating efficiency.

In some embodiments, the adjustment assembly 20 includes an adjustment member 21 and a first drive member 22 drivingly connected to each other, where the adjustment member 21 is movably disposed on the coating die head 10, at least a portion of the adjustment member 21 is located within the discharge port 11, and the first drive member 22 is in a communication connection with the control assembly and drives the adjustment member 21 to move within the discharge port 11 to adjust the flow area of the discharge port 11.

Specifically, the adjustment member 21 is movably disposed on the upper die head 12 and the adjustment member 21 penetrates into the upper die head 12 from top to bottom, so that at least a portion of the adjustment member 21 is located within the discharge port 11. The first drive member 22 is in a communication connection with the control assembly and is drivingly connected to the adjustment member 21. The first drive member 22, under the control of the control assembly, can drive the adjustment member 21 to move within the discharge port 11. While moving within the discharge port 11, the adjustment member 21 can shield a portion of the discharge port 11. An area shielded by the adjustment member 21 in the discharge port 11 can adjust the flow area of the discharge port 11.

When the control assembly detects that the actual surface density of coating on the electrode plate falls below the target surface density, based on the difference between the two, the control assembly controls the first drive member 22 to drive the adjustment member 21 to move within the discharge port 11, thus reducing the area shielded by the adjustment member 21 in the discharge port 11. At this point, the flow area of the discharge port 11 increases, the discharge amount from the discharge port 11 increases, and the actual surface density of coating on the electrode plate increases.

When the control assembly detects that the actual surface density of coating on the electrode plate exceeds the target surface density, based on the difference between the two, the control assembly controls the first drive member 22 to drive the adjustment member 21 to move within the discharge port 11, increasing the area shielded by the adjustment member 21 in the discharge port 11. At this point, the flow area of the discharge port 11 decreases, the discharge amount from the discharge port 11 decreases, and the actual surface density of coating on the electrode plate decreases.

Thus, adjustment member 21 is driven to move within the discharge port 11 by the first drive member 22, allowing for rapid adjustment of the flow area of the discharge port 11 and the discharge amount from the discharge port 11, thereby improving the coating quality of the electrode plate.

In some embodiments, the discharge port 11 extends longitudinally along a first direction a, the adjustment member 21 includes a plurality of adjustment sub-members 211 arranged along the first direction a, and each adjustment sub-member 211 is movably disposed within the discharge port 11 along a second direction b. The first direction a, the second direction b, and an opening direction c of the discharge port 11 are arranged to intersect pairwise.

It should be noted that the electrode plate typically has a certain width. During coating of the electrode plate, to ensure that the slurry is more uniformly applied onto the electrode plate, the first direction a is set as a width direction of the electrode plate, meaning the discharge port 11 extends longitudinally along the width direction of the electrode plate. During coating, an extension length of the discharge port 11 matches a width of the electrode plate to be coated. The electrode plate moves along a length direction of the electrode plate, and the slurry is continuously extruded from the discharge port 11. As the electrode plate moves, the slurry is uniformly applied onto the electrode plate.

Specifically, the first direction a, the second direction b, and the opening direction c of the discharge port 11 are disposed perpendicular to each other. During the coating process, the first direction a represents the width direction of the electrode plate, the opening direction c of the discharge port 11 represents the length direction of the electrode plate, and the second direction b represents a thickness direction of the electrode plate.

All adjustment sub-members 211 are disposed along the first direction a on the upper die head 12, and each adjustment sub-member 211 is movably disposed within the discharge port 11 along the second direction b. Thus, all adjustment sub-members 211 divide the discharge port 11 into a plurality of discharge sub-ports along the first direction a. Each adjustment sub-member 211 can adjust a flow area of a corresponding discharge sub-port by moving along the second direction b within the corresponding discharge sub-port, thereby enabling adjustment of the actual surface density of the slurry applied onto different positions along the width direction of the electrode plate through each adjustment sub-member 211.

For example, when the number of adjustment sub-members 211 is N, the electrode plate can be divided into N regions along the width direction, with each region corresponding to one group of discharge sub-ports and adjustment sub-members 211. When the control assembly detects that the actual surface density of the M-th (0 ≤ M ≤ N) region on the electrode plate exceeds the target surface density, based on the difference between the actual surface density and the target surface density, the control assembly controls the M-th adjustment sub-member 211 to move downward by a certain distance, causing the adjustment sub-member 211 to shield the M-th discharge sub-port, reducing the flow area of the corresponding discharge sub-port, and decreasing the discharge amount of the slurry extruded from that discharge sub-port, thereby reducing the actual surface density of that region.

Further, each adjustment sub-member 211 may include an adjustment screw and an adjustment block connected to each other. Each adjustment screw is disposed vertically on the upper die head 12, and the adjustment block is disposed at a lower end of the adjustment screw, locating within the discharge port 11. The first drive member 22 may be configured as a drive cylinder, where the drive cylinder is connected to the adjustment screw and can drive the adjustment screw to move up and down, thereby driving the adjustment block to move up and down within the discharge port 11, to adjust the flow area of the discharge port 11.

The cooperation between the plurality of adjustment sub-members 211 and the discharge port 11 enables division of the discharge port 11 into different discharge sub-ports along the first direction a. Adjustment of the flow area of a corresponding discharge sub-port by each adjustment sub-member 211 allows targeted adjustment of the slurry coating amount in the coating region corresponding to that discharge sub-port. This enables more accurate adjustment of the coating quality on the electrode plate.

In some embodiments, the coating apparatus 100 further includes a movement assembly 30 disposed on the coating die head 10, where the movement assembly 30 is connected to the first drive member 22 and is in a communication connection with the control assembly. The movement assembly 30 is configured to drive the first drive member 22 to move along the first direction a, enabling the first drive member 22 to drive each adjustment sub-member 211 to move along the second direction b.

Specifically, the movement assembly 30 is disposed on the upper die head 12 and can move along the first direction a under the control of the control assembly, driving the first drive member 22 to move along the first direction a, thereby enabling the first drive member 22 to be connected to a corresponding adjustment sub-member 211.

For example, when the control assembly detects that the actual surface density of the M-th region on the electrode plate exceeds the target surface density, the control assembly first controls the movement assembly 30 to move along the first direction a, causing the movement assembly 30 to drive the first drive member 22 to move along the first direction a to a position of the M-th adjustment sub-member 211. Then, the first drive member 22 is connected to the M-th adjustment sub-member 211, and the control assembly, based on the difference between the actual surface density and the target surface density, controls the first drive member 22 to drive the M-th adjustment sub-member 211 to move downward by a certain distance, causing the adjustment sub-member 211 to shield the M-th discharge sub-port, reducing the flow area of the corresponding discharge sub-port, and decreasing the discharge amount of the slurry extruded from that discharge sub-port, thereby reducing the actual surface density of the M-th region.

Thus, control by the control assembly enables the movement assembly 30 to drive the first drive member 22 to flexibly move along the first direction a, so that the first drive member 22 is connected to a corresponding adjustment sub-member 211 more accurately, thereby accurately adjusting the coating quality on the electrode plate at the position corresponding to that adjustment sub-member 211.

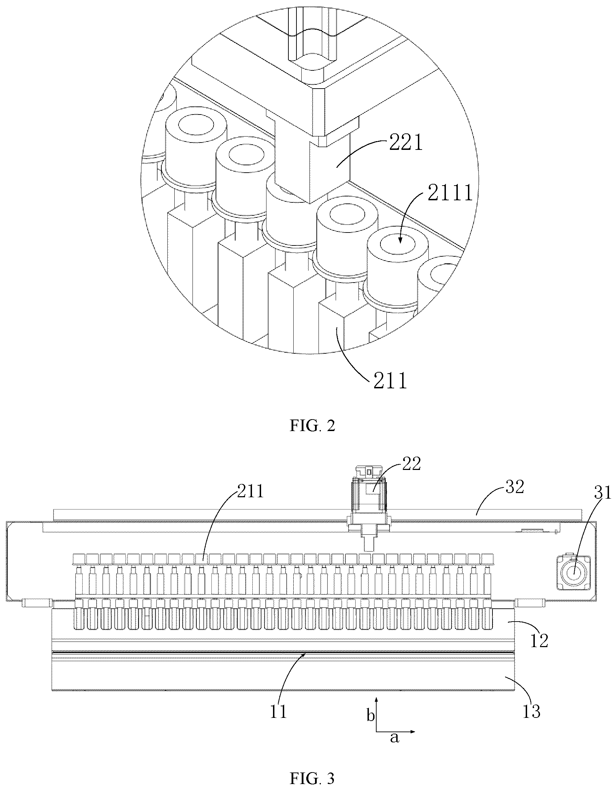

Referring to FIG. 1 and FIG. 2, in some embodiments, a plug connector 221 is provided at one of each adjustment sub-member 211 and the first drive member 22, and a slot 2111 is provided at the other one of each adjustment sub-member 211 and the first drive member 22 in a protruding manner, and each adjustment sub-member 211 and the first drive member 22 are in plug-fit cooperation through the plug connector 221 and the slot 2111.

Specifically, when the adjustment sub-member 211 is configured as an adjustment screw and the first drive member 22 is configured as a drive cylinder, the slot 2111 is provided on a top surface of each adjustment screw, and the plug connector 221 cooperating with the slot 2111 protrudes from a bottom surface of the drive cylinder. When the first drive member 22 moves to a position of a corresponding adjustment sub-member 211, the first drive member 22 moves downward, allowing the plug connector 221 to be inserted into the slot 2111 of the corresponding adjustment sub-member 211, thereby achieving a plug connection between the first drive member 22 and that adjustment sub-member 211. At this point, the first drive member 22 can drive that adjustment sub-member 211 to move upward or downward, thereby adjusting the flow area of the discharge sub-port corresponding to that adjustment sub-member 211.

It can be understood that, the slot 2111 may alternatively be provided on the first drive member 22, and the plug connector 221 cooperating with the slot 2111 may be provided on the adjustment sub-member 211. When the first drive member 22 moves downward, the plug connector 221 on the corresponding adjustment sub-member 211 is inserted into the slot 2111 of the first drive member 22, thereby achieving a connection fit between the first drive member 22 and that adjustment sub-member 211.

The cooperation between the plug connector 221 and the slot 2111 enables rapid connection and disconnection between the first drive member 22 and different adjustment sub-members 211, allowing the first drive member 22 to drive different adjustment sub-members 211 to move within the discharge port 11, thus more flexibly adjusting the flow area of the discharge port 11 at different positions along the first direction a.

Referring to FIG. 1 and FIG. 3 together, in some embodiments, the movement assembly 30 includes a second drive member 31, a guide member 32, and a transmission member 33, where the guide member 32 is disposed on the coating die head 10 in a manner of extending along the first direction a, the transmission member 33 is movably disposed on the guide member 32 along the first direction a and is connected to both the first drive member 22 and the second drive member 31, and the second drive member 31 is in a communication connection with the control assembly. The transmission member 33 is configured to drive the first drive member 22 to move along the first direction a under the drive of the second drive member 31.

Specifically, the second drive member 31 may be configured, without limitation, as a drive motor, the guide member 32 may be configured, without limitation, as a guide rail or guide groove, and the transmission member 33 may be configured, without limitation, as a slider or moving chain.

The second drive member 31, under the control of the control assembly, can drive the transmission member 33 to move along the first direction a under the guidance of the guide member 32, thereby driving the first drive member 22 to move along the first direction a. This enables the first drive member 22 to more accurately and more flexibly move to a position corresponding to a corresponding adjustment sub-member 211, thereby smoothly driving that adjustment sub-member 211 to move within the discharge port 11.

In some embodiments, the control assembly includes a detection member and a control member in communication connection, where the detection member is configured to detect the actual surface density of coating on the electrode plate, and the control member is configured to receive the actual surface density and compare the actual surface density with the target surface density to obtain a difference, so as to control the adjustment assembly 20 to adjust the flow area of the discharge port 11 based on the difference.

The detection member may be configured, without limitation, as a scanning head, where the detection member is configured to detect the actual surface density of a coated region on the electrode plate and feed the detected actual surface density back to the control member. The target surface density is preset in the control member, and the control member compares the actual surface density with the target surface density to obtain the difference between the two. Based on the obtained difference, the control member can control the adjustment assembly 20 to perform corresponding operations, enabling the actual surface density to gradually approach the target surface density or be equal to the target surface density.

The provision of the detection member and the control member enables real-time detection of the actual surface density of the coated region on the electrode plate and timely feedback to the control member. The control member can rapidly compare the actual surface density with the target surface density, allowing the adjustment assembly 20 to be controlled in time to perform a corresponding operation, so that the actual surface density can gradually approach the target surface density or be equal to the target surface density, thus improving the coating quality and coating efficiency of the electrode plate.

In some embodiments, the coating apparatus 100 further includes a piezoelectric sensor (not shown in the figure) in communication connection with the control member, where the piezoelectric sensor is connected to each adjustment sub-member 211 and the piezoelectric sensor is configured to be capable of adjusting a movement distance of a corresponding adjustment sub-member 211 along the second direction b based on an actual output voltage of each adjustment sub-member 211.

Specifically, the piezoelectric sensor may include piezoelectric ceramics built into the coating apparatus 100. Based on the characteristics of piezoelectric ceramics, when the actual output voltage of the adjustment sub-member 211 exceeds a preset range, the piezoelectric ceramics deform by a certain amount based on a voltage difference. The adjustment sub-member 211 moves a certain distance along the second direction b under the influence of this deformation, thereby changing the flow area of the discharge sub-port corresponding to that adjustment sub-member 211.

The piezoelectric sensor can flexibly adjust the flow area of the discharge port 11 based on the actual output voltage in the coating apparatus 100, which is in cooperation with parameters of the actual surface density on the coated electrode plate to more comprehensively reflect the coating quality on the electrode plate, thereby improving the accuracy of coating process adjustment.

In some embodiments, the coating apparatus 100 further includes a displacement sensor (not shown in the figure) in communication connection with the control member, where the displacement sensor is connected to each adjustment sub-member 211 and is configured to detect a movement distance of each adjustment sub-member 211 along the second direction b.

Specifically, the displacement sensor can be configured to measure the movement distance of each adjustment sub-member 211 along the second direction b. It can be understood that the displacement sensor may be but not limited to a potentiometer-type displacement sensor, an inductive displacement sensor, a capacitive displacement sensor, an eddy current displacement sensor, and a Hall displacement sensor.

When each adjustment sub-member 211 moves once along the second direction b under the drive of the first drive member 22, the displacement sensor records the distance of that movement of the adjustment sub-member 211. The detection member detects the actual surface density of the region on the electrode plate corresponding to that adjustment sub-member 211 in real time after the movement and feeds the actual surface density back to the control member. The control member compares the actual surface density with the target surface density and, based on the difference between the two, controls the first drive member 22 to drive the adjustment sub-member 211 to move a second time along the second direction b, where the displacement sensor records the distance of the second movement of the adjustment sub-member 211.

After the displacement sensor feeds the two movement distances back to the control member, the control member can adjust a next movement distance of the adjustment sub-member 211 along the second direction b under the drive of the first drive member 22 based on a relationship between the two movement distances and a change in the actual surface density after the two movements, thereby improving the adjustment accuracy.

For example, if the target surface density is Y, and the actual surface density detected by the detection member for the first time is X1 (X1 < Y), the difference between the actual surface density and the target surface density is Y - X1. At this point, the control member controls the first drive member 22 to drive the adjustment sub-member 211 to move upward by a certain distance, and the displacement sensor records this distance as L1.

After the first movement, the detection member continues to detect the actual surface density as X2 (X2 < Y), and the difference between the actual surface density and the target surface density is Y - X2. At this point, the control member controls the first drive member 22 to drive the adjustment sub-member 211 to move upward by a certain distance, and the displacement sensor records this distance as L2.

At this point, a change between L1 and L2 corresponds to a change between X1 and X2. After the second movement, the detection member continues to detect the actual surface density as X3 (X3 < Y), and the control member can correspondingly adjust the movement distance of the adjustment sub-member 211 based on a change between X3 and X2, improving the adjustment accuracy and enabling the actual surface density to be adjusted more quickly to approach or be equal to the target surface density, thus improving the adjustment efficiency.

Detection and feedback for the movement distance of the adjustment sub-member 211 along the second direction b by the displacement sensor, combined with the actual surface density, the actual output voltage of the adjustment sub-member 211, and the actual movement distance of the adjustment sub-member 211, enable real-time feedback and adjustment during the adjustment process. This achieves intelligent closed-loop control of the adjustment assembly 20, effectively improving the coating quality and coating efficiency.

Based on the same concept as the coating apparatus 100 described above, this application provides a battery processing device including the coating apparatus 100 as described above.

According to one or more embodiments, during the coating process of an electrode plate, the detection member first detects the actual surface density of a coated region on the electrode plate in real time and feeds the actual surface density back to the control member. The control member controls the second drive member 31 to drive the first drive member 22 to move along the first direction a, allowing the first drive member 22 to move to a position corresponding to an adjustment sub-member 211 requiring adjustment.

The control member controls the first drive member 22 to move downward and to be connected to the corresponding adjustment sub-member 211. The control member compares the actual surface density with the target surface density to obtain a difference between the two and, based on the difference, controls the first drive member 22 to drive the connected adjustment sub-member 211 to move along the second direction b, adjusting the flow area of the corresponding discharge sub-port and adjusting the discharge amount from that discharge sub-port, thus adjusting the actual surface density of coating on the electrode plate at that position.

Simultaneously, the piezoelectric sensor can sense the actual output voltage of the adjustment sub-member 211. When the actual output voltage exceeds a preset range, the piezoelectric sensor can generate a certain deformation, causing the adjustment sub-member 211 to move a certain distance along the second direction b under the influence of this deformation, thereby further adjusting the flow area of the discharge port 11.

Further, the displacement sensor records the movement distance of the adjustment sub-member 211 along the second direction b and feeds each movement distance back to the control member. The control member can adjust the movement distance of the adjustment sub-member 211 in subsequent adjustment processes based on each movement distance and a change in the actual surface density after each adjustment, thereby achieving closed-loop control of the adjustment process.

Technical features of the embodiments described above can be combined in any manner. To keep the description concise, not all possible combinations of the technical features in the above embodiments are described. However, as long as no contradiction exists in the combination of these technical features, such combinations shall be considered as being within the scope recorded in this specification.

The embodiments described above merely show several implementation manners of this application and provide relatively specific and detailed descriptions, but shall not be understood as limitations to the scope of the patent application. It should be noted that for persons of ordinary skill in the art, various variations and improvements can be made without departing from the concept of this application, all of which fall within the scope of this application. Therefore, the scope of the patent of this application shall be subject to the appended claims.

## Claims

1. A coating apparatus, configured to coat an electrode plate, wherein the coating apparatus comprises:
a coating die head comprising an upper die head and a lower die head spaced apart from each other, wherein the upper die head and the lower die head are spaced apart to form a discharge port;
an adjustment assembly, disposed on the upper die head; and
a control assembly connected to the adjustment assembly, wherein the control assembly is configured to detect an actual surface density of coating on the electrode plate and control the adjustment assembly to adjust a flow area of the discharge port based on a difference between the actual surface density and a target surface density;
wherein the adjustment assembly is configured to adjust the flow area of the discharge port by adjusting a spacing distance between the upper die head and the lower die head.

2. The coating apparatus according to claim 1, wherein the adjustment assembly comprises an adjustment member and a first drive member drivingly connected to each other, the adjustment member is movably disposed on the coating die head, at least a portion of the adjustment member is located within the discharge port, and the first drive member is in a communication connection with the control assembly and is configured to drive the adjustment member to move within the discharge port to adjust the flow area of the discharge port.

3. The coating apparatus according to claim 2, wherein the discharge port extends longitudinally along a first direction, the adjustment member comprises a plurality of adjustment sub-members arranged along the first direction, and each of the adjustment sub-members is movably disposed within the discharge port along a second direction;
wherein the first direction, the second direction, and an opening direction of the discharge port are arranged to intersect pairwise.

4. The coating apparatus according to claim 3, wherein the coating apparatus further comprises a movement assembly disposed on the coating die head, the movement assembly is connected to the first drive member and is in a communication connection with the control assembly; and
the movement assembly is configured to drive the first drive member to move along the first direction, enabling the first drive member to drive each of the adjustment sub-members to move along the second direction.

5. The coating apparatus according to claim 4, wherein a plug connector is provided at one of each of the adjustment sub-members and the first drive member in a protruding manner, a slot is provided at the other one of each of the adjustment sub-members and the first drive member, and each of the adjustment sub-members and the first drive member are in plug-fit cooperation through the plug connector and the slot.

6. The coating apparatus according to claim 4 or 5, wherein the movement assembly comprises a second drive member, a guide member, and a transmission member, the guide member is disposed on the coating die head in a manner of extending along the first direction, the transmission member is movably disposed on the guide member along the first direction and is connected to both the first drive member and the second drive member, and the second drive member is in a communication connection with the control assembly;
the transmission member is configured to drive the first drive member to move along the first direction under the drive of the second drive member.

7. The coating apparatus according to any one of claims 4 to 6, wherein the control assembly comprises a detection member and a control member in communication connection, the detection member is configured to detect the actual surface density of coating on the electrode plate, and the control member is configured to receive the actual surface density and compare the actual surface density with the target surface density to obtain a difference so as to control the adjustment assembly to adjust the flow area of the discharge port based on the difference.

8. The coating apparatus according to claim 7, wherein the coating apparatus further comprises a piezoelectric sensor in communication connection with the control member, the piezoelectric sensor is connected to each of the adjustment sub-members, and the piezoelectric sensor is configured to be capable of adjusting a movement distance of a corresponding adjustment sub-member along the second direction based on an actual output voltage of each of the adjustment sub-members.

9. The coating apparatus according to claim 8, wherein the coating apparatus further comprises a displacement sensor in communication connection with the control member, the displacement sensor is connected to each of the adjustment sub-members and is configured to detect a movement distance of each of the adjustment sub-members along the second direction.

10. A battery processing device, comprising the coating apparatus according to any one of claims 1 to 9.
